# EUROPEAN PATENT APPLICATION

(11) **EP 4 120 299 A1**
(43) Date of publication of application: **18.01.2023**
(21) Application number: 20923928.4
(22) Date of filing: 11.03.2020
(51) Int. Cl.: H01G 13/00, H01C 17/28, H01G 4/30

(54) **ELECTRONIC COMPONENT MANUFACTURING METHOD AND DEVICE**

(71) Applicant: Creative Coatings Co., Ltd., Shinjuku-ku Tokyo 162-0842 (JP)
(72) Inventor: SATO, Eiji, Tokyo 162-0842 (JP); SAKAMOTO, Hitoshi, Tokyo 162-0842 (JP)
(74) Representative: Wunderlich & Heim Patentanwälte Partnerschaftsgesellschaft mbB
(86) International application number: PCT/JP2020/010448
(87) International publication number: WO 2021/181548

(57) **Abstract**

An electronic component manufacturing method comprising: a first step of moving an electronic component body (1) in a first direction (A) relative to a dip layer (3) of a conductive paste to immerse the electronic component body in the dip layer (3); a second step of moving the electronic component body relative to the dip layer in a second direction (B) that is opposite to the first direction (A), thereby separating the electronic component body from the dip layer; a third step of forcibly cutting a connection between the conductive paste (4) coated on the end portions (2) of the electronic component body and the dip layer (3), using a contact with a solid or fluid cutting means (6, 7); and a fourth step of removing excess paste (4A) from the conductive paste coated on the end portions of the electronic component body. The third and fourth steps may be conducted simultaneously by cutting and removing the paste with the paste removal member (6, 7).

## Description

### TECHNICAL FIELD

The present invention relates to a method and apparatus and the like for manufacturing an electronic component.

### BACKGROUND ART

The end surfaces of electronic component bodies such as multilayer ceramic capacitors, inductors, and thermistors are dip-coated with a conductive paste layer so that external electrodes are formed on the electronic component bodies. The thickness of the conductive paste layer left after dip-coating is not uniform. Therefore, it has been proposed to raise an electronic component body dip-coated with a conductive paste from a dip layer formed on a surface of a surface plate, and then to bring a conductive paste layer formed on the end surface of the electronic component body into contact with the surface of the surface plate from which the dip layer has been removed (Patent Document 1). This step is called a blotting step because excess conductive paste on the electronic component body is wiped off with the surface plate. This blotting step is expected to form an almost uniform layer of conductive paste on the end surface of the electronic component body.

However, even after the blotting step, if the electronic component body is raised from the surface plate, the conductive paste layer of the electronic component body is pulled toward the surface plate due to the surface tension of the conductive paste transferred on the surface plate. Besides, a sticky string producing phenomenon where the conductive paste on the surface plate and the conductive paste of the electronic component body connect also occurs. Due to this phenomenon, the external electrodes of the electronic component body tend to be thicker in the area covering the center of the end surface and thinner in the area covering the periphery.

In the case of such external electrodes, the flatness of the surface of the external electrodes is impaired and non-uniformity is caused in the film thickness of the external electrodes. Besides, due to the surface tension of the conductive paste transferred to the surface plate, the conductive paste layer moves toward the surface plate, especially in the corner portions between the end surface and side surface of the electronic component body, which reduces the film thickness in the corner portions. Soldering electronic components with such external electrodes to boards makes the solder quality unstable.

For dip-coating and blotting steps using a surface plate, the conductive paste on the surface plate must be removed after dip-coating, and the electronic components must be then brought into contact with the surface plate again and separated from the surface plate.

Therefore, the applicant has proposed a technique in which after the electronic component body is separated from the dip layer on the surface plate and the conductive paste layer is formed on an end surface of the electronic component body, the conductive paste layer coated on the end surface of the electronic component body is shaped by bringing it into contact with a wire that vibrates with sound waves, for example, ultrasonic waves (Patent Document 2).

### RELATED-ART DOCUMENT

### PATENT DOCUMENT

Patent Document 1: JP-A-S63-45813
Patent Document 2: WO2019/198710

### SUMMARY OF THE INVENTION

### TECHNICAL PROBLEM

When the conductive paste layer coated on the end surface of the electronic component body is shaped by bringing it into contact with a wire that vibrates with sound waves, for example, ultrasonic waves, the thickness of the conductive paste layer on the end surface of the electronic component body is made more uniform. The shaping step using the wire does not necessarily require the conventional blotting step, which is conducted after the dip layer is removed from the surface plate used for coating, and is therefore expected to shorten the time required for the step.

An object of some aspects of the invention is to provide an electronic component manufacturing method that improves the shape of external electrode formed not only on the end surface but also on the side surface and corner portion of the electronic component. An object of some other aspects of the invention is to provide a method and apparatus for manufacturing electronic component that also reduces the time required for the steps.

### SOLUTION TO PROBLEM

(1) In accordance with one of some aspect, there is provided an electronic component manufacturing method comprising:
   a first step of moving an electronic component body in a first direction relative to a dip layer of a conductive paste to immerse end portion of the electronic component body in the dip layer;
   a second step of moving the electronic component body relative to the dip layer in a second direction that is opposite to the first direction, thereby separating the end portion of the electronic component body from the dip layer;
   a third step of forcibly cutting a connection between the conductive paste coated on the end portion of the electronic component body and the dip layer using a contact with a solid or fluid cutting means before the connection is naturally cut by way of separating the end portion of the electronic component body from the dip layer; and
   a fourth step of removing excess paste material from the conductive paste coated on the end portion of the electronic component body after the third step.
   According to an aspect of the invention, through the first and second steps a conductive paste is coated on the end portion of the electronic component body, including the end surface and the side surface continuous with the end surface. A connection between the conductive paste coated on the end portion of the electronic component body and the dip layer is forcibly cut using a contact with a solid or fluid cutting means in the third step. In addition, the fourth step removes the excess paste of the conductive paste coated on the end portion of the electronic component body. In this case, when the connection between the conductive paste coated on the end portion of the electronic component body and the dip layer is forcibly cut in the third step, an adequate film thickness of the conductive paste is ensured on the side surface of the electronic component body and on the corner portion that connect the side surface and the end surface together. On the other hand, more conductive paste coated on the side surface of the electronic component body and on the corner portion that connect the side surface and the end surface together moves to a sticky string portion as the gap between the end portion of the electronic component body and the dip layer is increased by conducting the second step. The film thickness of the conductive paste layer on the side surface and corner portion of the electronic component body is almost determined when the sticky string portion is naturally cut by widening the aforementioned gap to a point, but it was found that sufficient film thickness cannot be ensured at this point. For this reason, forcing the third step at some point before the sticky string portion is naturally cut ensures, compared with the conventional art, a greater film thickness of the conductive paste layer on the side surface and corner portion of the electronic component body. Removing excess paste from the conductive paste coated on the end surface of the electronic component body forms a flattened conductive paste layer.
(2) In accordance with one of some aspect, there is provided the electronic component manufacturing method according to the aspect (1), wherein
   a paste removal member may be used as the solid cutting means, and
   when the conductive paste coated on the end portion of the electronic component body is connected to the dip layer, the electronic component body may be moved relative to the paste removal member in a third direction that is parallel to end surface of the end portion of the electronic component body so that the third step and fourth step are conducted simultaneously and a conductive paste layer separated from the dip layer and the excess paste is formed on the end portion of the electronic component body.
   Hence, the third and fourth steps may be conducted simultaneously using a conductive paste member. Hence, the third and fourth steps can perform the shaping function beyond the function of the conventional blotting step for shaping the conductive paste layer by bringing it into contact with, for example, the surface plate after the dip layer has been removed. Besides, the time required for the step is shortened because the paste removal member can be used without waiting for the dip layer on the surface plate to be removed, whereas in the conventional blotting step, it is necessary to wait for the dip layer on the surface plate to be removed.
(3) In accordance with one of some aspect, there is provided the electronic component manufacturing method according to the aspect (2), wherein the paste removal member may bring a wire, an edge of a first plate, or an edge of a through hole in a second plate having the through hole penetrating in a thickness direction, into contact with the excess paste.
   In other words, the paste removal member can be addressed for any shape that can be removed while being in contact with the excess paste by movement relative to the electronic component body in the third direction.
(4) In accordance with one of some aspect, there is provided the electronic component manufacturing method according to the aspect (2), may further comprise a fifth step of moving the electronic component body relative to the paste removal member in a fourth direction that is opposite to the third direction, thereby removing part of the paste in the conductive paste layer and shaping the conductive paste layer with use of the paste removal member.
   Consequently, the conductive paste layer can be reshaped by removing, through the fifth step, part of the paste of the conductive paste layer that has been shaped and formed on the end surface of the electronic component body through the third and fourth steps is reshaped. Thus, the flatness of the conductive paste layer can be further improved. Note that the conductive paste layer may be reshaped three or more times by repeatedly moving the paste removal member relatively in the third and fourth directions.
(5) In accordance with one of some aspect, there is provided the electronic component manufacturing method according to the aspect (2) or (4), wherein
   the first step and the second step each may include moving a jig holding multiple electronic component bodies each including the electronic component body, relative to the dip layer in either in the first direction or the second direction, and
   the third step and the fourth step may include moving the jig relative to the paste removal member in the third direction.
   Use of the jig allows the conductive paste layer to be formed on the multiple electronic component bodies.
(6) In accordance with one of some aspect, there is provided the electronic component manufacturing method according to the aspect (5), wherein
   the jig may hold M (M is an integer greater than or equal to 2) electronic component bodies along a fifth direction that intersects the third direction in a plane parallel to the end surface of the electronic component bodies, and
   the first to fourth steps may be conducted simultaneously for the M electronic component bodies.
   Hence, the first to fourth steps can be conducted simultaneously on the M electronic component bodies arranged in one dimension.
(7) In accordance with one of some aspect, there is provided the electronic component manufacturing method according to the aspect (6), wherein
   the paste removal member may include a plate parallel to the end surface of the electronic component bodies, and slit passing through the plate in a thickness direction, and the slit extends in the fifth direction,
   the first step and the second step each may include moving the end portions of the M electronic component bodies through the slit relatively between above and below the plate, and
   the third step and the fourth step may include simultaneously removing the excess paste from the end portions of the M electronic component bodies with use of first edge of the slit.
   Hence, the first and second steps are conducted by moving the M electronic component bodies relative to each other simultaneously through the slit, so that the third and fourth steps can be conducted to simultaneously remove the excess paste from the M electronic component bodies with use of the first edge of the slit.
(8) In accordance with one of some aspect, there is provided the electronic component manufacturing method according to the aspect (7) according to the aspect (4), wherein the fifth step may remove the part of the paste in the conductive paste layer with use of second edge of the slit.
   Hence, the conductive paste layer can be reshaped for the M electronic component bodies.
(9) In accordance with one of some aspect, there is provided the electronic component manufacturing method according to the aspect (6), wherein
   the paste removal member may include a wire or plate extending in the fifth direction,
   the first step and the second step each may include moving the end portions of the M electronic component bodies relatively between above and below the height position of the wire or the plate, and
   the third and fourth steps may include removing the excess paste from the end portions of the M electronic component bodies with use of edges of the wire or the plate.
   Hence, the first and second steps can be conducted without interfering with the wire or plate, so that the third and fourth steps can be conducted to simultaneously remove excess paste from the M electronic component bodies with use of the edges of the wire or plate.
(10) In accordance with one of some aspect, there is provided the electronic component manufacturing method according to the aspect (6), wherein
   the jig may hold N (N is an integer greater than or equal to 2) electronic component bodies along the third direction, and
   the first to fourth steps may be conducted simultaneously for (M × N) electronic component bodies.
   Hence, the first to fourth steps can be conducted simultaneously on the (M × N) electronic component bodies arranged in two dimensions.
(11) In accordance with one of some aspect, there is provided the electronic component manufacturing method according to the aspect (10), wherein
   the paste removal member may include a plate parallel to the end surfaces of the (M × N) electronic component bodies, and N slits penetrating the plate in a thickness direction, and the N slits extend in parallel to each other in the fifth direction and spaced in the third direction,
   the first step and the second step may include moving the end portions of the (M × N) electronic component bodies through the N slits relatively between above and below the plate, and
   the third step and the fourth step may include removing the excess paste from the end portions of the (M × N) electronic component bodies with use of first edges of the N slits.
   Hence, the first and second steps are conducted by moving the (M × N) electronic component bodies relative to each other simultaneously through the N slits, so that the third and fourth steps can be conducted to simultaneously remove the excess paste from the (M × N) electronic component bodies with use of the first edges of the N slits.
(12) In accordance with one of some aspect, there is provided the electronic component manufacturing method according to the aspect (11) according to the aspect (4), wherein the fifth step may remove the part of the paste in the conductive paste layer with use of second edges of the N slits.
   Hence, the conductive paste layer can be reshaped for the (M × N) electronic component bodies.
(13) In accordance with one of some aspect, there is provided the electronic component manufacturing method according to the aspect (10), wherein
   the paste removal member may include N wires or N plates extending in the fifth direction and spaced in the third direction,
   the first step and the second step each may include a step of moving the end portions of the (M × N) electronic component bodies relatively between above and below the same height position of the N wires or the N plates, and
   the third and fourth steps may include a step of removing the excess paste from the end portions of the (M × N) electronic component bodies with use of edges of the N wires or the N plates.
   Hence, the first and second steps can be conducted without interfering with the N wires or N plates, so that the third and fourth steps can be conducted to simultaneously remove the excess paste from the (M × N) electronic component bodies with use of the N wires or N plates.
(14) In accordance with another aspect, there is provided an electronic component manufacturing apparatus forming electrodes in end portions of multiple electronic component bodies, respectively, the apparatus comprising:
   a dip layer formation section on which a dip layer of a conductive paste is to be coated and formed;
   a jig holding the multiple electronic component bodies so that the end portions of the multiple electronic component bodies face the dip layer;
   a paste removal member removing excess paste from the conductive paste coated on the end portions of the multiple electronic component bodies;
   a first moving mechanism moving the jig relative to the dip layer formation section, in a normal direction of a main surface of the dip layer formation section; and
   a second moving mechanism moving the jig relative to the paste removal member, in a direction parallel to the main surface of the dip layer formation section, wherein
   the first moving mechanism moves the jig relative to the dip layer formation section in a first direction along the normal direction to immerse the end portions of the multiple electronic component bodies in the dip layer, and then moves the jig relative to the dip layer formation section in a second direction that is opposite to the first direction to separate the end portions of the electronic component bodies from the dip layer, and
   when the conductive pastes coated on the end portions of the electronic component bodies are connected to the dip layer, the second moving mechanism moves the jig relative to the paste removal member in a third direction that is parallel to the main surface of the dip layer formation section, thereby forming a conductive paste layer separated from the excess paste and the dip layer, in the end portions of the electronic component bodies.

According to another aspect of the invention, the first and second steps of a method according to one aspect of the invention can be conducted by moving the jig relative to the dip layer formation section in the normal direction of the main surface of the dip layer formation section, using the first moving mechanism. Hence, the conductive paste can be coated on the end portions, including the end surfaces and the side surfaces continuous with the end surfaces, of the multiple electronic component bodies. Also, the third and fourth steps of a method according to one aspect of the invention can be conducted simultaneously by moving the jig relative to the paste removal member in the third direction parallel to the main surface of the dip layer formation section, using the second moving mechanism. Hence, the film thickness of the conductive paste layer formed on the respective side surfaces and corner portions of the multiple electronic component bodies can be ensured, and the conductive paste layer formed on the respective end surfaces of the multiple electronic component bodies can be flattened.

### BRIEF DESCRIPTION OF THE DRAWINGS

FIG. 1 is a schematic diagram of an electronic component body and a dip layer of a conductive paste layer used in an electronic component manufacturing method according to the invention.
FIG. 2 is a diagram illustrating a first step of a first embodiment of the invention.
FIG. 3 is a diagram illustrating a second step of the first embodiment of the invention.
FIG. 4 is a diagram illustrating third and fourth steps of the first embodiment of the invention.
FIGS. 5A to 5C are diagrams illustrating changes in the film thickness of conductive paste on the side surfaces and corner portions of the electronic component body during sticky string occurrence.
FIG. 6 is a diagram illustrating a fifth step of the first embodiment of the invention.
FIG. 7 is a diagram illustrating the third step in which M electronic component bodies are aligned along a single wire.
FIG. 8 is a diagram illustrating the third step in which M electronic component bodies are aligned along each of N wires.
FIG. 9 is a diagram illustrating the third step in which the single wire illustrated in FIG. 7 is replaced by a single slit.
FIG. 10 is a diagram illustrating the third step in which the N wires illustrated in FIG. 8 are replaced by N slits.
FIG. 11 is a schematic perspective view of a paste removal member with (M × N) through holes in place of the N slits illustrated in FIG. 10.
FIG. 12 is a partially enlarged view illustrating the state before the start of the first step of the second embodiment of the invention.
FIG. 13 is a partially enlarged view illustrating a first step of the second embodiment of the invention.
FIG. 14 is a partially enlarged view illustrating a second step of the second embodiment of the invention.
FIG. 15 is a diagram illustrating third and fourth steps of a second embodiment of the invention.
FIG. 16 is a partially enlarged view of FIG. 15.
FIG. 17 is a diagram illustrating a manufacturing apparatus for electronic components according to the third embodiment of the invention.
FIG. 18 is a block diagram of a control system of the manufacturing apparatus illustrated in FIG. 17.
FIG. 19 is a perspective view of an electronic component with external electrodes formed on the end portions.
FIG. 20 is a cross-sectional view of the external electrodes of the electronic component illustrated in FIG. 19.
FIG. 21 is a schematic perspective view of a chip three-terminal capacitor manufactured according to the third embodiment of the invention.
FIG. 22 is a diagram illustrating placement of the chip three-terminal capacitor illustrated in FIG. 21 on a board.
FIGS. 23A and 23B illustrate the first step of intaglio printing a ground electrode, FIG. 23A is a view along the longitudinal direction X1 illustrated in FIG. 21, and FIG. 23B is a view along the lateral direction Y1 illustrated in FIG. 21.
FIGS. 24A and 24B illustrate the second step of intaglio printing a ground electrode, FIG. 24A is a view along the longitudinal direction X1 illustrated in FIG. 21, and FIG. 24B is a view along the lateral direction Y1 illustrated in FIG. 21.
FIGS. 25A and 25B illustrate the third step of intaglio printing a ground electrode, FIG. 25A is a view along the longitudinal direction X1 illustrated in FIG. 21, and FIG. 25B is a view along the lateral direction Y1 illustrated in FIG. 21.

### DESCRIPTION OF EMBODIMENTS

The following disclosure includes many different embodiments and examples for implementing different features of the aforementioned subject matter. Of course, these are merely examples and are not intended to limit anything. In addition, reference numerals and/or letters may be repeated in various examples in this disclosure. Such repetition is for the sake of brevity and clarity, and does not require that there be a relationship between the described various embodiments and/or configurations. Furthermore, the statement that a first element is "connected" or "coupled" to a second element includes embodiments in which the first element and the second element are directly connected or coupled to each other, as well as embodiments in which the first element and the second element are connected or coupled to each other indirectly with one or more other elements therebetween. Also, the statement that the first element "moves" relative to the second element includes embodiments of relative movement in which at least one of the first element and the second element moves relative to the other.

### 1. First Embodiment

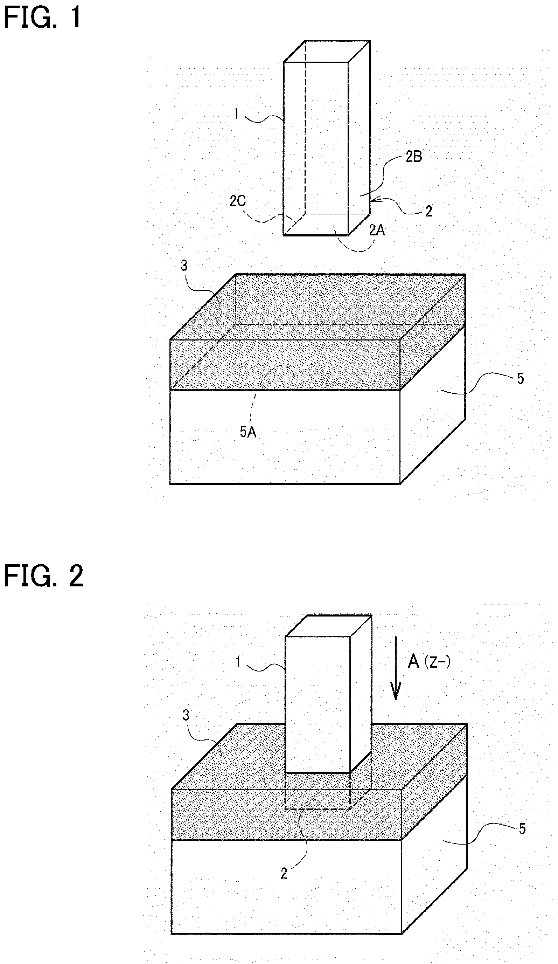

FIG. 1 schematically illustrates an electronic component body 1 having an end portion 2 and a dip layer 3 of a conductive paste formed to a uniform thickness on a dip layer formation portion, e.g., the main surface 5A of a surface plate 5. The end portion 2 has an end surface 2A, a side surface 2B continuous with it, and a corner portion 2C between the end surface 2A and the side surface 2B. The electronic component manufacturing method according to this embodiment by forming an electrode on the end portion 2 of the electronic component body 1 includes at least the first to fourth steps explained below.

FIGS. 2 to 4 illustrate the first to fourth steps according to the first embodiment. For the sake of clarity of explanation, some components in the drawings are depicted in exaggerated dimensions: for example, the dimensions and shapes of the dip layer 3, conductive paste 4, and conductive paste layer 4B are enlarged compared to the dimensions and shapes of other components.

### 1.1. First Step (Coating Step)

The first step, as illustrated in FIG. 2, is to move the electronic component body 1 relative to the surface plate 5 (dip layer 3) in a direction that intersects the main surface 5A of the surface plate 5, for example, in the first direction A (direction Z-) parallel to the normal direction of the main surface 5A (vertical direction in FIG. 2). Thus, the end portion 2 of the electronic component body 1 is dipped into the dip layer 3. In FIG. 2, although the electronic component body 1 is being lowered in the first direction (direction Z-), the surface plate 5 may be raised in the first direction (direction Z+), or both the electronic component body 1 and the surface plate 5 may be moved in the first direction where both move away from each other.

### 1.2. Second Step (Evacuation Step After Coating)

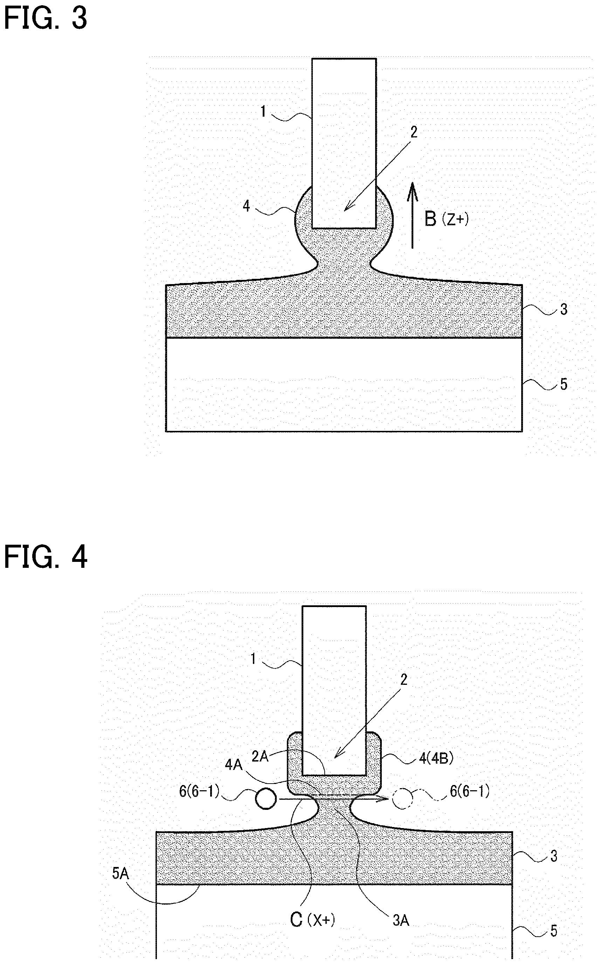

Subsequently, in the second step illustrated in FIG. 3, the electronic component body 1 and the dip layer 3 are relatively moved in the second direction B (direction Z+) which is the direction opposite to the first direction A to separate the end portion 2 of the electronic component body 1 from the dip layer 3. Consequently, the end portion 2 of the electronic component body 1 is coated with the conductive paste 4. In FIG. 3, although the electronic component body 1 is raised in the second direction (direction Z+), the surface plate 5 may be lowered in the first direction (direction Z-), or both the electronic component body 1 and the surface plate 5 may be moved in the second direction where both move away from each other.

### 1.3. Third and fourth Steps (Paste Cutting and Removal Step)

Subsequently, in the simultaneous step including the third step (paste cutting step) and the fourth step (excess paste removal step) illustrated in FIG. 4, excess paste material below the dashed line 4A (hereinafter referred to as excess paste material 4A) is removed from the conductive paste 4 coated on the end surface 2A of the electronic component body 1, using a paste removal member, for example, the wire 6. The wire 6 can be of any type as long as it is tensioned and stretched, and is preferably, for example, a piano wire or copper wire. The paste removal member 6 can be any member capable of scraping off excess paste material 4A by relative contact movement. The paste removal member 6 is not limited to a wire, but may be a first plate such as a blade, or a second plate having a through hole penetrating in the thickness direction. The edge of the first plate or the edge of the through hole in the second plate can scrape off excess paste material 4A. In FIG. 4, although the paste removal member 6 is moved horizontally in the third direction C (direction X+), the electronic component body 1 may be moved horizontally in the third direction (direction X-), or both the electronic component body 1 and the paste removal member 6 may be moved in the third direction where both move away from each other.

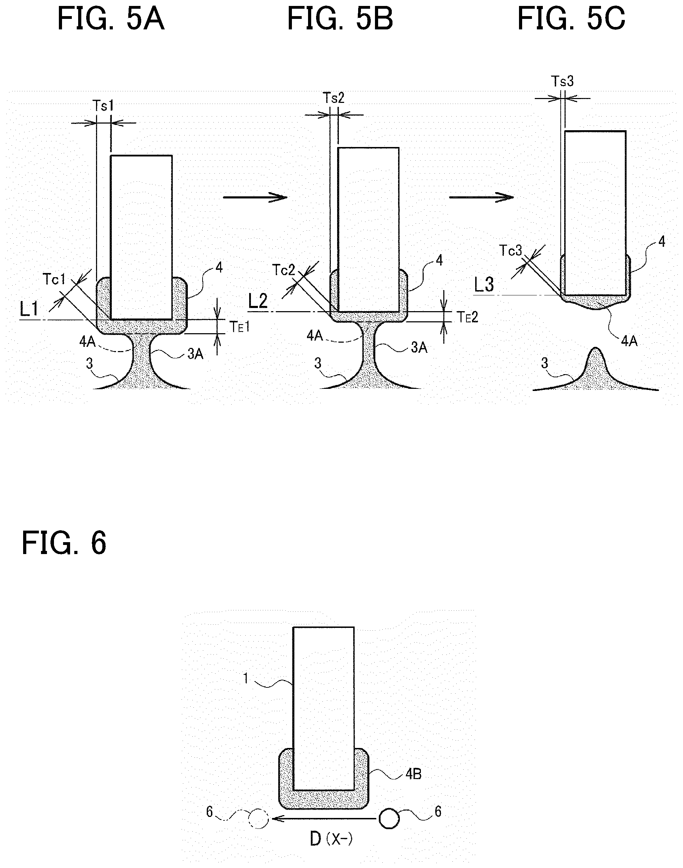

The third step is conducted when the conductive paste 4 coated on the end portion 2 of the electronic component body 1 is connected to the dip layer 3 on the surface plate 5, that is, when the portion between the pastes 3 and 4 are connected together through the sticky string 3A. The reason why this third step is necessary will be explained with reference to FIGS. 5A to 5C. FIGS. 5A to 5C illustrate changes in the film thickness of the conductive paste 4 on the side surface 2B and corner portion 2C of the electronic component body 1 during sticky string occurrence or after the sticky string is naturally cut.

FIGS. 5A to 5C illustrate different heights L1 to L3 with respect to the surface plate 5 on the end surface 2A of the electronic component body 1 during the second step. At the smallest height L1 illustrated in FIG. 5A in the early stage of the second step, the sticky string 3A connecting the dip layer 3 to the conductive paste 4 after coating is relatively thick and short. At the middle height L2 illustrated in FIG. 5B in the middle stage of the second step, the sticky string 3A connecting the dip layer 3 to the conductive paste 4 after coating is relatively thin and long. If the second step is further continued, at the largest height L3 illustrated in FIG. 5C, the sticky string 3A has been naturally cut off and no longer exists.

Here, T_{E} is the film thickness of the conductive paste 4 coated on the end surface 2A of the end portion 2 of the electronic component body 1, T_{S} is the film thickness of the conductive paste 4 coated on the side surface 2B, and Tc is the film thickness of the conductive paste 4 coated on the corner portion 2C. Tsi and Tci are the film thicknesses of the side surface 2B and corner portion 2C in the state shown in FIG. 5A, T_{S2} and T_{C2} are these film thicknesses in the state shown in FIG. 5B, and T_{S3} and T_{C3} are these film thicknesses in the state shown in FIG. 5C. The relationship between the film thicknesses is expressed as T_{S1} > T_{S2} > T_{S3} and T_{C1} > T_{C2} > T_{C3}. In other words, the larger the heights L1 to L3 of the end surface 2A in the second step, the smaller the film thickness T_{S} of the side surface 2B and the film thickness Tc of the corner portion 2C dependently are. The reason for this is that the conductive paste 4 coated on the end portion 2 of the electronic component body 1 is pulled by the sticky string 3A during the second step and moves to the sticky string 3A and is absorbed thereto. For the same reason, referring to FIGS. 5A and 5B, the relationship between the film thicknesses of the end surface 2A are expressed as T_{E1} > T_{E2} after the excess paste 4A below the dashed line has been removed.

In this embodiment, as illustrated in FIG. 5A or 5B, the third and fourth steps are conducted, for example, simultaneously in the state where the sticky string 3A exists. In the third and fourth steps, the electronic component body 1 and the paste removal member 6 are moved relative to each other in the third direction C so that the paste removal member 6 crosses the electronic component body 1 at least once in the plane view normal to the main surface 5A of the surface plate 5. For example, when the linear paste removal member 6, which is a single wire 6-1, only crosses the electronic component body 1 once, i.e., only relatively moves in the direction C indicated by the arrow in FIG. 4, the excess conductive paste 4A below the dashed line illustrated in FIG. 4 is removed. Thus, rather than conducting the fourth step without the sticky string 3A as illustrated in FIG. 5C, conducting the third step when the sticky string 3A exists as illustrated in FIG. 5A or 5B can surely make the film thickness T_{E} of the end surface 2A, the film thickness T_{S} of the side surface 2B, and the film thickness Tc of the corner portion 2C larger. In other words, at the end of the third step, the film thickness T_{E} of the end surface 2A, the film thickness T_{S} of the side surface 2B, and the film thickness Tc of the corner portion 2C are almost fixed, so it is essential to start the third step with the sticky string 3A. The paste 4 on the end surface 2A of the electronic component body 1 illustrated in FIG. 5C without the sticky string 3A is shaped by bringing it into contact with the surface plate, for example, through a conventional blotting step. Hence, the paste 4 on the end surface 2A of the electronic component body 1 illustrated in FIG. 5C is made almost uniform as the excess paste 4 A is leveled off by the surface plate. However, the film thickness of the paste 4 on the end surface 2A increases as the excess paste 4A is evened out, for example, becomes larger than the film thickness T_{C3} of the corner portion 2C. In this respect, this embodiment can reduce the difference between the film thicknesses of the paste 4 coated on the end surface 2A and the side surface 2B illustrated in FIG. 5A or 5B.

In light of this, the third step (paste cutting step) and the fourth step (excess paste removal step) should not necessarily be conducted simultaneously like in this embodiment, and the fourth step may be conducted after the end of the third step. In this case, the third step only has to forcibly cut the sticky string 3A, for example, by bringing a paste cutter (cutting means) into contact with the sticky string 3A, while the fourth step should remove the excess paste using the paste removal member. In this case, the fourth step, which is conducted separately from the third step, does not necessarily use the paste removal member 6, and may use, for example, a conventional blotting step in which excess paste is transferred to a surface plate. The cutting means should not necessarily be a paste cutter, which is a solid, and may be a fluid, such as gas or liquid, that can cut the excess paste by contact, especially a jetted fluid.

In this embodiment, the electronic component body 1 and the paste removal member 6 are moved relatively in the third direction C parallel to the main surface 5A of the surface plate 5 (that is, the direction parallel to the end surface 2A of the electronic component body 1); therefore, the excess paste 4A of the conductive paste 4 on the end surface 2A of the electronic component body 1 is removed using the paste removal member 6, together with the sticky string 3A. Thus, the conductive paste 4 coated on the end surface 2A of the electronic component body 1 is flattened as shown by the dashed line in FIG. 4, so that the film thickness is made uniform. Note that the paste removal member is not limited to the wire 6, but may be a plate 7 with a slit or through hole, or a plate without a slit or through hole, as explained below.

As described above, through the third and fourth steps, the conductive paste 4 flattened on the end surface 2A of the electronic component body 1 and the relatively thick-made conductive paste 4 on the side surface 2B and corner portion 2C of the electronic component body 1 determine the shape and film thickness of the conductive paste layer 4B coated and formed on the end portion 2 of the electronic component body 1.

### 1.4. Fifth Step (Second Paste Removal Step)

The fifth step illustrated in FIG. 6 may be conducted after the fourth step, if necessary. In FIG. 6, the paste removal member 6 is moved relative to the electronic component body 1 in the fourth direction D (direction X-) which is the direction opposite to the third direction C (direction X+) illustrated in FIG. 4. Hence, the paste removal member 6 may be relatively moved across the electronic component body 1 in a plan view for one or more reciprocating motions in order to enhance the flatness of the conductive paste layer 4B coated on the end surface 2A of the electronic component body 1.

### 2. Second Embodiment

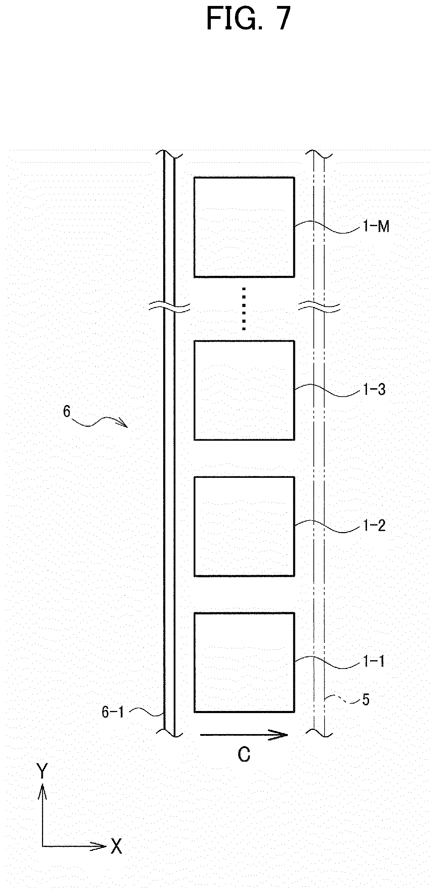

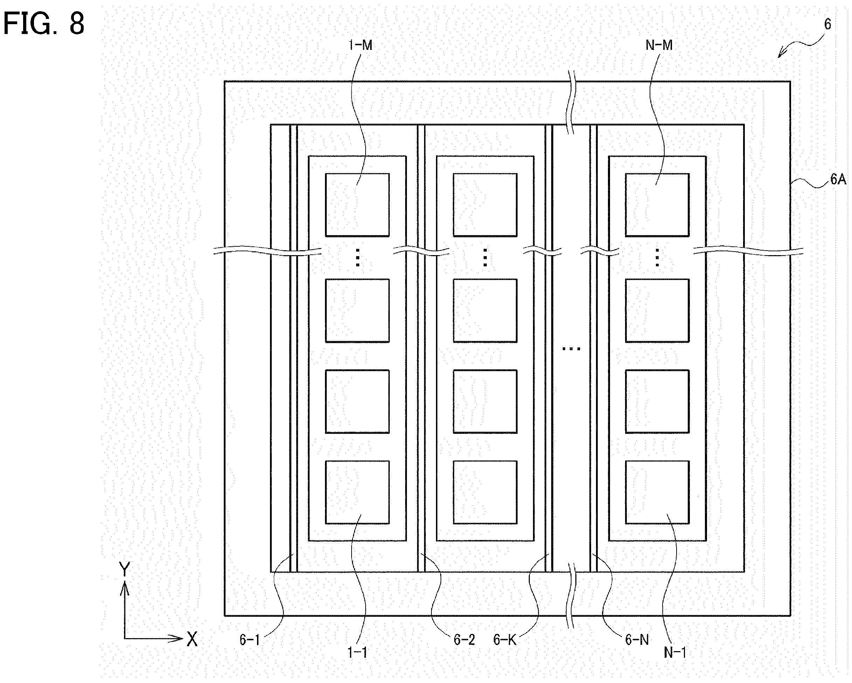

In the second embodiment of the invention, the first to fourth steps are conducted simultaneously for multiple electronic component bodies 1 aligned in a single column, or multiple electronic component bodies 1 aligned in multiple rows and multiple columns. In FIG. 7, a single wire 6 is placed in the X-Y plane parallel to the main surface 5A of the surface plate 5 illustrated in FIGS. 1 to 4, extending in the direction Y (fifth direction), for example. M (M is an integer greater than or equal to 2) electronic component bodies 1-1 to 1-M are held on a jig (not illustrated in the drawing) along the direction Y. The third and fourth steps can be conducted simultaneously for the M electronic component bodies 1-1 to 1-M, while the wire 6 is moved in the third direction C relative to the M electronic component bodies 1. On the other hand, referring to FIG. 8, (M × N) (N is an integer greater than or equal to 2) electronic component bodies 1-1 to 1-(M × N) are held on a jig (not illustrated in the drawing) in the X-Y plane parallel to the main surface 5A of the surface plate 5 illustrated in FIGS. 1 to FIG. 4. The paste removal member 6 illustrated in FIG. 8 includes N (N is an integer of greater than or equal to 2) wires 6-1 to 6-N parallel to the direction Y (fifth direction), for example. The N wires 6-1 to 6-N are supported by a frame 6A, for example. The third and fourth steps can be conducted simultaneously for the (M × N) electronic component bodies 1-1 to N-M, moving the N wires 6-1 to 6-N to the third direction C relative to the (M × N) electronic component bodies 1-1 to N-M. The first and second steps are conducted while the (M × N) electronic component bodies 1-1 to N-M are located in positions (shown in FIG. 8) where they do not interfere with the N wires 6-1 to 6-N and the frame 6A in a plan view. The first and second steps are conducted so that the (M × N) electronic component bodies 1-1 to N-M reciprocate relative to each other between above and below the N wires 6-1 to 6-N.

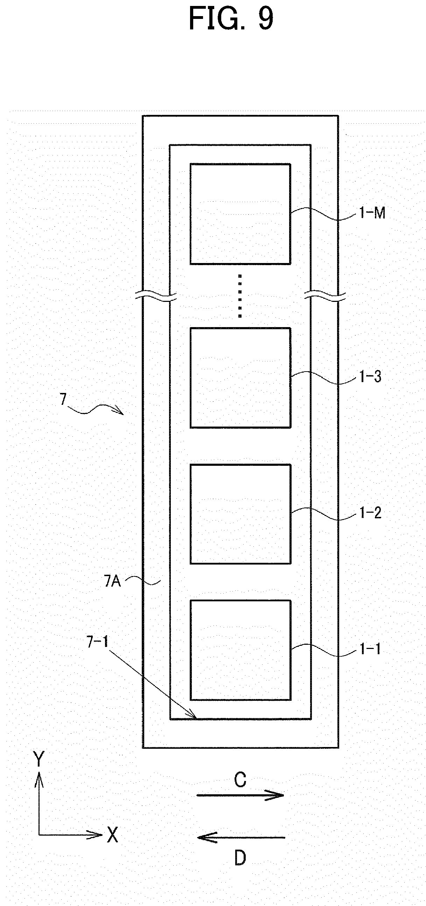

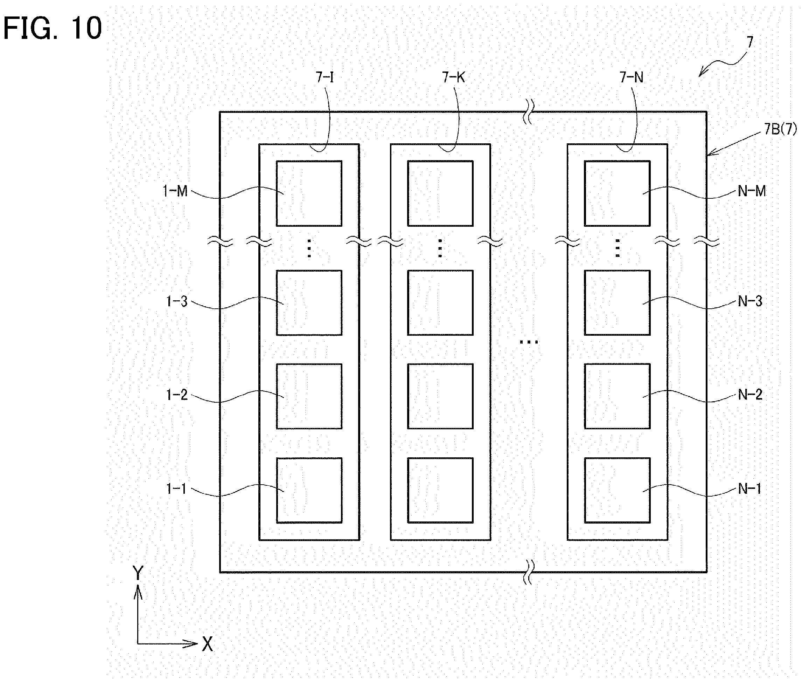

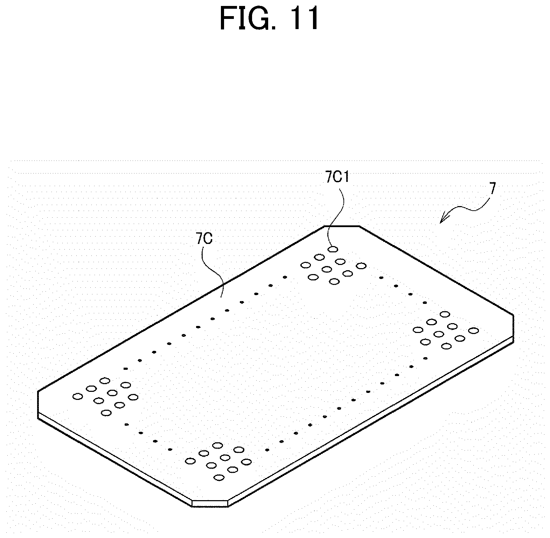

FIG. 9 illustrates an example of using a plate 7A having a slit 7-1 instead of the wire 6 illustrated in FIG. 7, as a paste removal member 7. FIG. 10 illustrates an example of using a plate 7B having N slits 7-1 to 7-N instead of the N wires 6-1 to 6-N illustrated in FIG. 8, as a paste removal member 7. In FIGS. 9 and 10, the paste removal member 7 has a single slit 7-1 or N slits 7-1 to 7-N that extend in the thickness direction of the plate. Each of the slits 7-1 to 7-N is formed to a size large enough to allow M electronic component bodies 1 aligned in the direction Y to pass therethrough before and after coating. Each single slit may be changed to M through holes as long as M electronic component bodies 1 can pass therethrough. For example, instead of the N slits 7-1 to 7-N illustrated in FIG. 10, as illustrated in FIG. 11, a paste removal member 7 that is a plate 7C with (M × N) through holes 7C1 may be used. Similarly, instead of the slit 7-1 illustrated in FIG. 9, M through holes 7C1 may be used. Note that the shape of the through holes 7C1 may be similar or dissimilar to that of the end surface 2A of the electronic component body 1. The paste coating method using the paste removal member 7 shown in FIG. 10 will be described below.

### 2.1. First Step (Coating Step)

The coating step is the step of immersing the end portion 2 including the end surface 2A of each electronic component body 1 held on a carrier plate 20 (see FIG. 1) in the dip layer 3 of the conductive paste formed on the surface 5A of the surface plate 5, and coating the end portion 2 of each electronic component body 1 with the conductive paste.

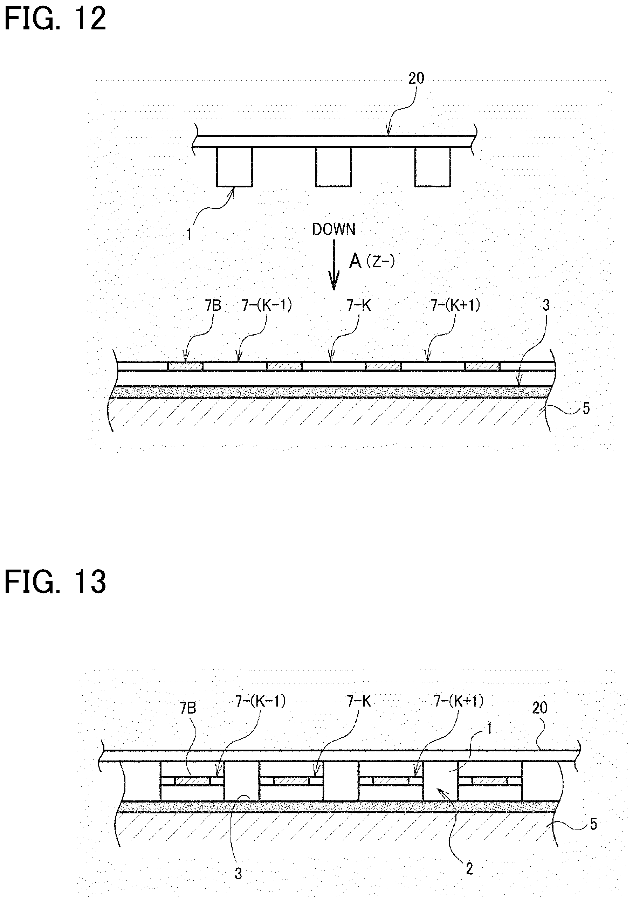

FIGS. 12 and 13 illustrate the coating step. Before the coating step, as illustrated in FIG. 12, the carrier plate 20 supporting the multiple electronic component bodies 1 is located above the paste removal member 7B and the surface plate 5. The carrier plate 20 moves from the position illustrated in FIG. 12 toward the surface plate 5 relatively downward in the first direction A (direction Z-).

The relatively vertical movement allows the multiple electronic component bodies 1 supported by the carrier plate 20 to pass through the respective slits 7-k. FIG. 13 illustrates the state where the end portions 2 of the electronic component bodies 1 that have passed through the slits 7-k are in contact with the dip layer 3 of the paste material formed on the surface plate 5.

### 2.2. Second Step (Evacuation Step After Coating)

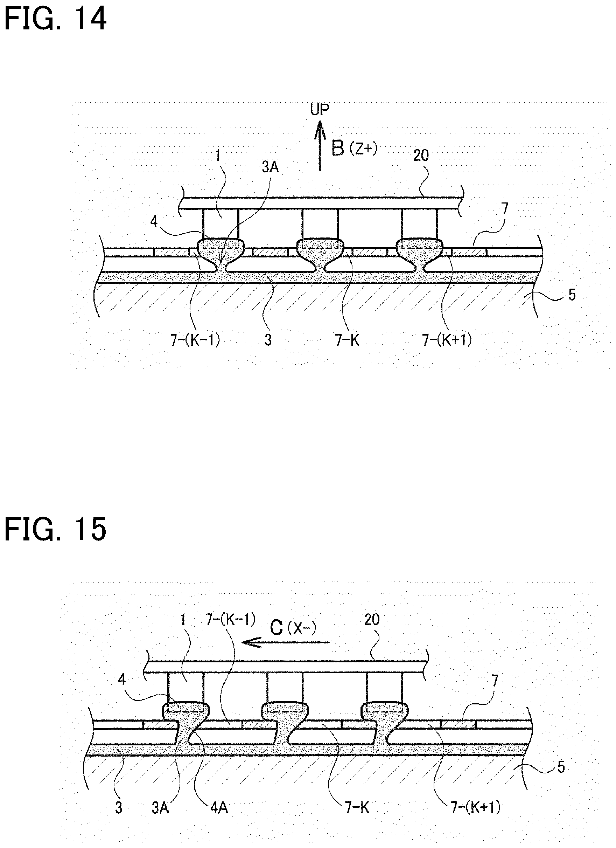

After that, the carrier plate 20 moves up in the second direction (direction Z+) relative to the surface plate 5, as illustrated in FIG. 14, the multiple electronic component bodies 1 supported by the carrier plate 20 pass through the respective slits 7-k again, together with the conductive paste 4 coated on the end portions 2. At the end of this second step, the conductive paste 4 coated on the end portions 2 of the electronic component bodies 1 connects with the dip layer 3, thereby containing excess paste material 4A containing the paste material to be the sticky string 3A illustrated in FIG. 5A or 5B. An objective of the paste removal step conducted after the coating step is to remove the excess paste material 4A in the coated conductive paste 4 and form a conductive paste layer 4B separated from the sticky string 3A.

### 2.3. Third and Fourth Steps (Paste Cutting and Removal Step)

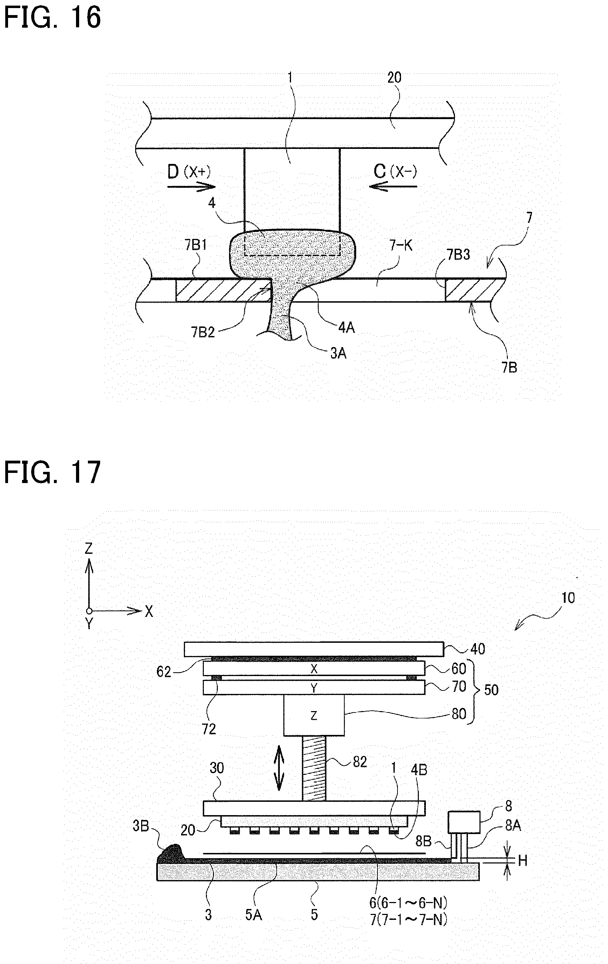

FIG. 15 illustrates the third and fourth steps, and FIG. 16 is a partially enlarged view of FIG. 15. The paste removal step starts in the state where the conductive paste 4 coated on the end portions 2 of the electronic component bodies 1 is connected to the dip layer 3 via the sticky string 3A. The third and fourth steps are conducted by moving the paste removal member 7 relative to the carrier plate 20, horizontally in the third direction C (direction X-). FIGS. 15 and 16 illustrate the state where the electronic component bodies 1 that have passed through the slits 7-k again have been moved relatively horizontally to the left. At this time, the bottom surface of the conductive paste 4 is evened out on the top surface 7B1 of the plate 7B. The excess paste material 4A hanging down below the top surface 7B1 of the plate 7B is scraped off at the first edge 7B2 of the slit 7-K. The scraped excess paste material 4A falls onto the dip layer 3 on the surface plate 5 through the slit 7-k. Thus, the excess paste material 4A can be collected together with the used dip layer 3.

Through the aforementioned steps 3 and 4, the conductive paste layer 4B coated on the end portions 2 of the electronic component bodies 1 is evened out on the top surface 3B1 of the plate 210 and excess paste material 4A is scraped off at the first edge 7B2 of the slit 7-k, thereby shaping the conductive paste 4 coated on the end surface 2A into conductive paste layers 4B. The conductive paste layers 4B are made relatively thicker on the side surfaces 2B and corner portions 2C of the electronic component bodies 1 as described above.

### 2.4. Fifth Step (Second Paste Removal Step)

After the fourth step, the fifth step may be conducted in the same manner as in FIG. 6. In FIG. 16, the electronic component body 1 is moved relative to the paste removal member 6, in the fourth direction D (direction X+) which is the direction opposite to the third direction C (direction X-) that is the relative travel direction employed in the third and fourth steps. Here, the contour edge that defines the slit 7-k includes the first edge 7B2 and the opposite second edge 7B3. In the fourth step, the second edge 7B3 comes into contact with the bottom surface of the conductive paste layer 4B, which further shapes the conductive paste layer 4B. Hence, the flatness of especially the conductive paste layer 4B coated on the end surface 2A of each electronic component body 1 can be further improved.

### 3. Manufacturing Apparatus For Electronic Components

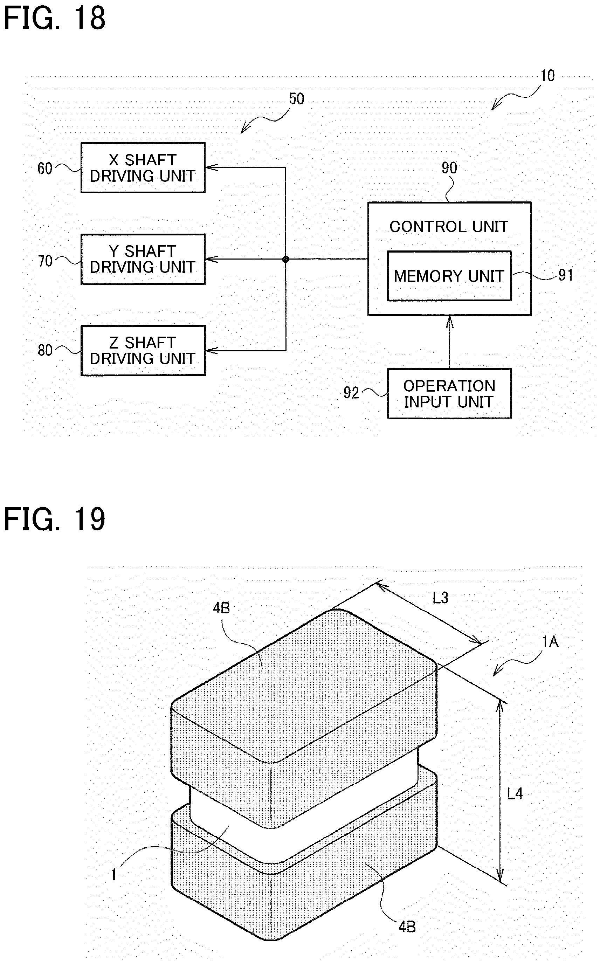

FIG. 17 is a manufacturing apparatus 10 used for implementation of this embodiment, and FIG. 18 is a block diagram of a control system. This manufacturing apparatus 10 includes a carrier plate (jig) 20, a moving mechanism 50, a surface plate 5, and the paste removal members 6 and 7 illustrated in any of the following: FIG. 4, FIG. 7, and FIGS. 8 to 10. In FIG. 17, the directions of the three orthogonal axes are X, Y, and Z. FIG. 17 illustrates the state where the conductive paste layers 4B are formed on the electronic component bodies 1 upon completion of the first to fourth steps.

A carrier plate (jig) 20 configured to hang and hold the electronic component bodies 1 holds the electronic component bodies 1. The carrier plate 20 is detachably supported by the jig fixing plate 30. A base 40 is fixed above the jig fixing plate 30, and a surface plate 5 is placed below the carrier plate 20. Furthermore, in this embodiment, a fixed or movable paste removal member 6 (7) is disposed between the carrier plate 20 and the surface plate 5. In this embodiment, the paste removal member 6 (7) and the surface plate 5 are fixed and the jig fixing plate 30 is movable. Alternatively, the jig fixing plate 30 may be fixed and the paste removal member 6 (7) and the surface plate 5 may be movable. The distance between the paste removal member 6 (7) and the surface plate 5 is preferably adjustable.

A squeegee unit 8 including a squeegee 8A and a blade 8B is mounted on the surface plate 5. The squeegee unit 8 moves on the surface plate 5. The squeegee unit 8 moves the blade 8B, thereby forming a dip layer 3 that has the height H made by the conductive paste 3B, on the surface 5A of the surface plate 5. The squeegee unit 8 moves the squeegee 8A, thereby scraping off and collecting the dip layer 3 from the surface 5A of the surface plate 5.

The base 40 has a moving mechanism 50 that moves the jig fixing plate 30. Here, the moving mechanism 50 may include an X shaft driving unit 60, a Y shaft driving unit 70, and a Z shaft driving unit 80. In this embodiment, the jig fixing plate 30, the carrier plate 20, and the electronic component bodies 1 are moved by the moving mechanism 50 in the direction of the Z-axis, relative to the surface plate 5 and paste removal member 6 (7), and are supposed to be movable along the X-Y plane parallel to the main surface 5A of the surface plate 5. With the moving mechanism 50, the aforementioned first, second, third, and fourth steps can be conducted, and if necessary, the fifth step can also be conducted. The moving mechanism 50 includes a first moving mechanism capable of relative movement in the direction of the Z-axis, and a second moving mechanism capable of relative movement in the X-Y plane.

The X shaft driving unit 60 can be composed of an X table capable of movement in the direction of the X-axis relative to the base 40 along an X shaft guide 62. The Y shaft driving unit 70 can be composed of a Y table capable of movement in the direction of the Y-axis relative to the X shaft driving unit 60 along a Y shaft guide 72. The Z shaft driving unit 80 is fixed, for example, to the Y shaft driving unit 70 and can move the Z shaft 82 in the direction of the Z-axis. The jig fixing plate 30 is fixed to the Z shaft 82. In FIG. 17, X, Y, and Z shaft drive sources, such as motors and their drive force transmission mechanisms, are not illustrated.

As illustrated in FIG. 18, the manufacturing apparatus 10 includes a control unit 90 that controls the X shaft driving unit 60, Y shaft driving unit 70, and Z shaft driving unit 80. The control unit 90 is connected to an operation input unit 92 such as a keyboard. The control unit 90 includes a memory unit 91. The memory unit 91 stores, for example, operation information input via the operation input unit 92 and pre-registered programs. The control unit 90 controls the X shaft driving unit 60, the Y shaft driving unit 70, and the Z shaft driving unit 80 according to the data and programs stored in the memory unit 91.

### 4. Electronic Components

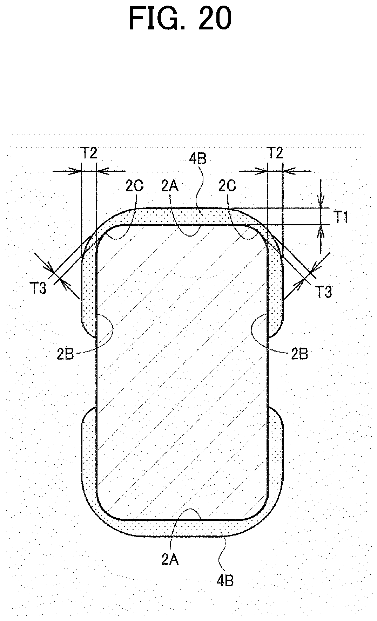

FIG. 19 illustrates an electronic component 1A manufactured by the manufacturing method described above, and FIG. 20 illustrates a cross-section of an electrode 4B formed on the electronic component body 1. Here, there is no particular restriction on the size of electronic components 1A to which the invention is applied, but electronic components 1A made ultra-small in accordance with downsizing are preferred. For an ultra-small electronic component 1A, L1 = 500 µm or less and L2 = 1000 µm or less, for example, when the maximum length of one side of the rectangular (square or rectangular) cross section illustrated in FIG. 19 is L1, and the length in the direction perpendicular to the rectangular cross section is L2. Preferably, L1 = 300 µm or less and L2 = 600 µm or less, more preferably, L1 = 200 µm or less and L2 = 400 µm or less, and even more preferably, L1 = 125 µm or less and L2 = 250 µm or less. The term "rectangle" here refers to a rectangle with two intersecting corners of exactly 90° as well as an abbreviated rectangle with curved or chamfered corners. Not surprisingly, the invention can also be applied to electronic components 1A other than those with rectangular cross sections.

### 4.1. Electrode Film Thickness

In FIG. 20, according to this embodiment, the thickness T1 of the electrode 4B formed on the end surface 2A through the third and fourth steps can be made substantially uniform. The third and fourth steps can also ensure a sufficient film thickness T2 of the side surface 2B. For example, a thickness of 40 µm or more can be secured for both T1 and T2, so that the film thickness T2 which is typically about half of the thickness T1 can be doubled. Furthermore, through the third and fourth steps, the film thickness T3 of the electrode 4B in the corner portions 2C can also be doubled, from about 10 µm to 20 µm, for example. These film thicknesses T1 to T3 are clearly distinguished from those obtained after the conventional blotting step.

### 5. Third Embodiment

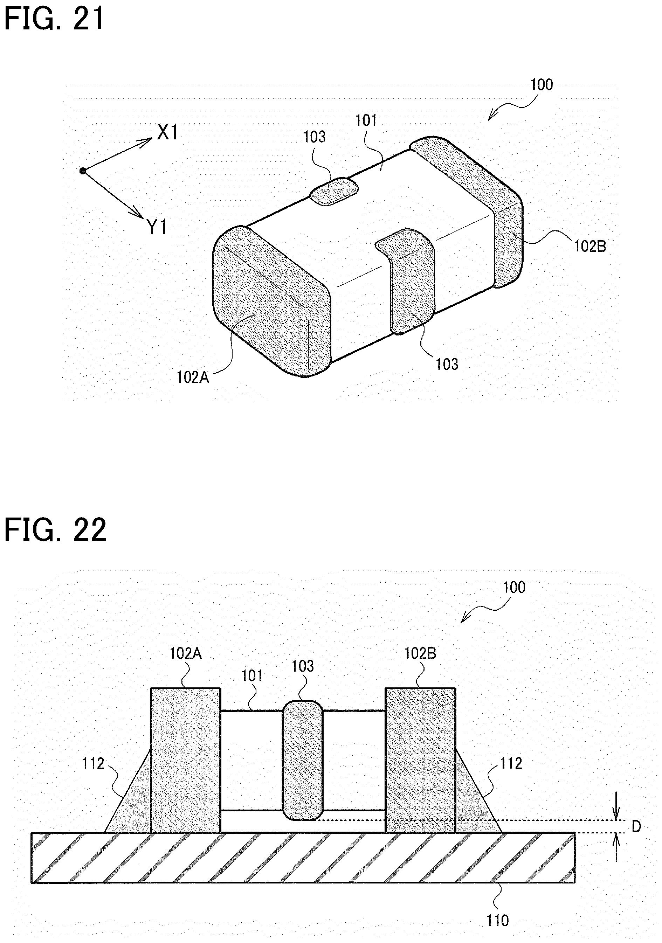

FIG. 21 illustrates an electronic component 100 manufactured by the third embodiment of the invention. The electronic component 100 is, for example, a chip three-terminal capacitor. The electronic component 100 includes two terminal through-hole electrodes 102A and 102B disposed at both end portions of the electronic component body 101 defined with respect to the longitudinal direction X1, and two ground electrodes 103 disposed at both end portions of the electronic component body 101 defined with respect to the lateral direction Y1.

As illustrated in FIG. 22, the chip three-terminal capacitor 100 has the three terminals 102 A, 102B, and 103 connected and mounted to the conductive pattern of the board 110 with solder 112. In that case, if a difference D illustrated in FIG. 22 occurs in thickness between the through-hole electrodes 102A and 102B and the ground electrodes 103, the connection will be poor. In the example illustrated in FIG. 22, the ground electrodes 103 are not connected to the board 110 due to their small thickness. For this reason, it is necessary to eliminate the difference D illustrated in FIG. 22.

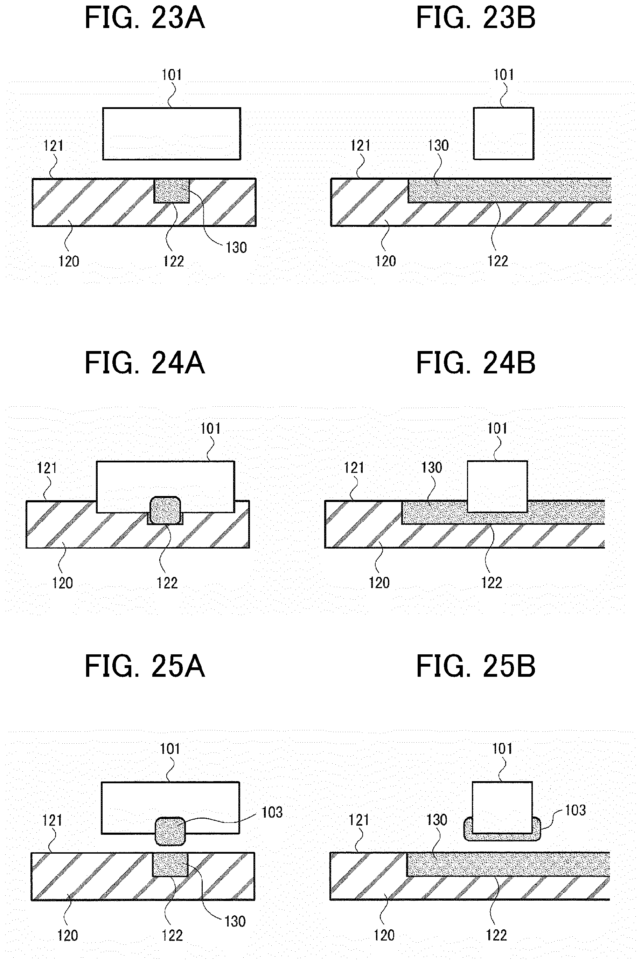

In this case, the through-hole electrodes 102A and 102B are formed in the coating step illustrated in FIG. 2, while the ground electrodes 103 are formed locally at the end portions of the electronic component body 101 defined with respect to the lateral direction Y1 by intaglio printing illustrated in FIGS. 23 to 26. First, in the first step illustrated in FIGS. 23A and 23B, a dip layer 130 of a paste is formed in a dip layer formation section, for example, a groove 122 made in the main surface 121 of rubber plate 120. Next, in the second step illustrated in FIGS. 24A and 24B, for example, the electronic component body 101 held on the jig 20 illustrated in FIG. 17 is moved relative to the rubber plate 120, so that the electronic component body 101 compresses and deforms the rubber plate 120, which allows the electronic component body 101 to be locally immersed in the dip layer 130 in the groove 122. Subsequently, in the third step illustrated in FIGS. 25A and 25B, the electronic component body 101 held on the jig 20 illustrated in FIG. 17 is moved relative to the rubber plate 120, which eliminates a contact between the electronic component body 101 and the rubber plate 120. Hence, as illustrated in FIG. 21, ground electrodes 103 are formed locally at both end portions of the electronic component body 101 defined with respect to the lateral direction Y1.

Conventionally, in the through-hole electrodes 102A and 102B illustrated in FIG. 22, the film thickness T3 of the corner portions 2C would be small as described with reference to FIG. 20, and the film thickness T3 of the corner portions 2C would be ensured by double or triple coating in which the coating step illustrated in FIG. 2 is conducted twice or three times. Hence, the film thickness T2 on the side surface 2B illustrated in FIG. 20 would become excessively large, and the difference D illustrated in FIG. 22 would sometimes occur.

In the third embodiment of the invention, the through-hole electrodes 102A and 102B illustrated in FIG. 21 are formed by applying, for example, the coating method of the first embodiment illustrated in FIGS. 1 to 4. Consequently, as described with reference to FIG. 20, double or triple coating is not always necessary for ensuring the film thickness T3 of the corner portions 2C. Accordingly, the difference D illustrated in FIG. 22 can be eliminated. Note that the invention does not preclude double or triple coating. If double or triple coating is adopted as needed, the final coating step should be conducted as illustrated in FIGS. 1 to 4.

The invention is applicable to the manufacture of various electronic components other than those illustrated in FIGS. 19 to 21, and the end portions of an electronic component body where a paste layer is to be formed can be, for example, either the end portions of the electronic component body 101 defined with respect to the longitudinal direction X1, or the end portions of the electronic component body 101 defined with respect to the lateral direction Y1 as illustrated in FIG. 21.

This embodiment has been described in detail above and it will be readily understood by those skilled in the art that many modifications can be made without substantively departing from the novel matters and advantageous effects of the invention. Accordingly, all such modifications should be included within the scope of the invention. For example, a term that is mentioned at least once herein or in the drawings together with a different term that is included in the broad sense or synonyms of the term may be replaced by that different term at any point herein or in the drawings. All combinations of the embodiments and modifications are also included in the scope of the invention. For instance, as the paste removal members 6 and 7 are used repeatedly, the cleaning step of removing the adhesion paste material as cleaning may be conducted, for example, by ejecting a jet of gas or liquid online or offline and/or vibrating the paste removal members 6 and 7.

### REFERENCE SIGNS LIST

- 1: Electronic component body
- 1A: Electronic component
- 2: End portion
- 2A: End surface
- 2B: Side surface
- 2C: Corner portion
- 3: Dip layer
- 3A: Sticky string
- 4: Conductive paste
- 4A: Excess paste
- 4B: Conductive paste layer (electrode)
- 5: Dip layer formation area (surface plate)
- 5A: Main surface
- 6, 6-1 to 6-N: Paste removal member (wire)
- 6A: Frame
- 7, 7A, 7B, 7C: Paste removal member (plate)
- 7C1: Through hole
- 7-1 to 7-N: Slit
- 8: Squeegee unit
- 10: Manufacturing apparatus
- 20: Jig
- 30: Jig fixing plate
- 20: Jig (carrier plate)
- 30: Jig fixing plate
- 40: Base
- 50: Moving mechanism
- 60, 70: Horizontally driving unit
- 80: Vertically driving unit
- 90: Control unit
- 91: Memory unit
- 92: Operation input unit
- 100: Electronic component (chip three-terminal capacitor)
- 101: Electronic component body
- 102A,: 102B Through-hole electrode
- 103: Ground electrode
- 110: Board
- 112: Solder
- 120: Dip layer formation area (rubber plate)
- 121: Main surface
- 122: Groove
- 130: Dip layer
- A (Z- or Z+): First direction
- B (Z+ or Z-): Second direction
- C (X+ or X-): Third direction
- D (X- or X+): Fourth direction
- Y: Fifth direction

## Claims

1. An electronic component manufacturing method comprising:
a first step of moving an electronic component body in a first direction relative to a dip layer of a conductive paste to immerse an end portion of the electronic component body in the dip layer;
a second step of moving the electronic component body relative to the dip layer in a second direction that is opposite to the first direction, thereby separating the end portion of the electronic component body from the dip layer;
a third step of forcibly cutting a connection between the conductive paste coated on the end portion of the electronic component body and the dip layer using a contact with a solid or fluid cutting means before the connection is naturally cut by way of separating the end portion of the electronic component body from the dip layer; and
a fourth step of removing excess paste material from the conductive paste coated on the end portion of the electronic component body after the third step.

2. The electronic component manufacturing method according to claim 1, wherein
a paste removal member is used as the solid cutting means, and
when the conductive paste coated on the end portion of the electronic component body is connected to the dip layer, the electronic component body is moved relative to the paste removal member in a third direction that is parallel to end surface of the end portion of the electronic component body so that the third step and fourth step are conducted simultaneously and a conductive paste layer separated from the dip layer and the excess paste is formed on the end portion of the electronic component body.

3. The electronic component manufacturing method according to claim 2, wherein the paste removal member brings a wire, an edge of a first plate, or an edge of a through hole in a second plate having the through hole penetrating in a thickness direction, into contact with the excess paste.

4. The electronic component manufacturing method according to claim 2, further comprising a fifth step of moving the electronic component body relative to the paste removal member in a fourth direction that is opposite to the third direction, thereby removing part of the paste in the conductive paste layer and shaping the conductive paste layer with use of the paste removal member.

5. The electronic component manufacturing method according to claim 2 or 4, wherein
the first step and the second step each include moving a jig holding multiple electronic component bodies each including the electronic component body, relative to the dip layer in either in the first direction or the second direction, and
the third step and the fourth step include moving the jig relative to the paste removal member in the third direction.

6. The electronic component manufacturing method according to claim 5, wherein
the jig holds M (M is an integer greater than or equal to 2) electronic component bodies along a fifth direction that intersects the third direction in a plane parallel to the end surfaces of the electronic component bodies, and
the first to fourth steps are conducted simultaneously for the M electronic component bodies.

7. The electronic component manufacturing method according to claim 6, wherein
the paste removal member includes a plate parallel to the end surface of the electronic component bodies, and slit passing through the plate in a thickness direction, and the slit extends in the fifth direction,
the first step and the second step each include moving the end portions of the M electronic component bodies through the slit relatively between above and below the plate, and
the third step and the fourth step include simultaneously removing the excess paste from the end portions of the M electronic component bodies with use of first edge of the slit.

8. The electronic component manufacturing method according to claim 7 according to claim 4, wherein the fifth step removes the part of the paste in the conductive paste layer with use of second edge of the slit.

9. The electronic component manufacturing method according to claim 6, wherein
the paste removal member includes a wire or plate extending in the fifth direction,
the first step and the second step each include moving the end portions of the M electronic component bodies relatively between above and below the height position of the wire or the plate, and
the third and fourth steps include removing the excess paste from the end portions of the M electronic component bodies with use of edges of the wire or the plate.

10. The electronic component manufacturing method according to claim 6, wherein
the jig holds N (N is an integer greater than or equal to 2) electronic component bodies along the third direction, and
the first to fourth steps are conducted simultaneously for (M × N) electronic component bodies.

11. The electronic component manufacturing method according to claim 10, wherein
the paste removal member includes a plate parallel to the end surfaces of the (M × N) electronic component bodies, and N slits passing through the plate in a thickness direction, and the N slits extend in parallel to each other in the fifth direction and spaced in the third direction,
the first step and the second step include moving the end portions of the (M × N) electronic component bodies through the N slits relatively between above and below the plate, and
the third step and the fourth step include removing the excess paste from the end portions of the (M × N) electronic component bodies with use of first edges of the N slits.

12. The electronic component manufacturing method according to claim 11 according to claim 4, wherein the fifth step removes the part of the paste in the conductive paste layer with use of second edges of the N slits.

13. The electronic component manufacturing method according to claim 10, wherein
the paste removal member includes N wires or N plates extending in the fifth direction and spaced in the third direction,
the first step and the second step each include a step of moving the end portions of the (M × N) electronic component bodies relatively between above and below the same height position of the N wires or the N plates, and
the third and fourth steps include a step of removing the excess paste from the end portions of the (M × N) electronic component bodies with use of edges of the N wires or the N plates.

14. An electronic component manufacturing apparatus forming electrodes in end portions of multiple electronic component bodies, respectively, the apparatus comprising:
a dip layer formation section on which a dip layer of a conductive paste is to be coated and formed;
a jig holding the multiple electronic component bodies so that the end portions of the multiple electronic component bodies face the dip layer;
a paste removal member removing excess paste from the conductive paste coated on the end portions of the multiple electronic component bodies;
a first moving mechanism moving the jig relative to the dip layer formation section, in a normal direction of a main surface of the dip layer formation section; and
a second moving mechanism moving the jig relative to the paste removal member, in a direction parallel to the main surface of the dip layer formation section, wherein
the first moving mechanism moves the jig relative to the dip layer formation section in a first direction along the normal direction to immerse the end portions of the multiple electronic component bodies in the dip layer, and then moves the jig relative to the dip layer formation section in a second direction that is opposite to the first direction to separate the end portions of the electronic component bodies from the dip layer, and
when the conductive pastes coated on the end portions of the electronic component bodies are connected to the dip layer, the second moving mechanism moves the jig relative to the paste removal member in a third direction that is parallel to the main surface of the dip layer formation section, thereby forming a conductive paste layer separated from the excess paste and the dip layer, in the end portions of the electronic component bodies.
